(19) **Europäisches Patentamt / European Patent Office / Office européen des brevets**

(11) **EP 1 515 612 B1**

(12) **EUROPEAN PATENT SPECIFICATION**

(45) Date of publication and mention of the grant of the patent:
**26.05.2010 Bulletin 2010/21**

(51) Int Cl.:
*A23C 19/032* (2006.01)   *A23J 3/34* (2006.01)
*A23J 1/20* (2006.01)

(21) Application number: **03724905.9**

(22) Date of filing: **03.06.2003**

(86) International application number:
**PCT/DK2003/000362**

(87) International publication number:
**WO 2003/101212 (11.12.2003 Gazette 2003/50)**

(54) **WHEY PROTEIN HYDROLYSATE**

MOLKENPROTEINHYDROLYSATE

HYDROLYSAT DE PROTEINE DU LACTOSERUM

(84) Designated Contracting States:
**AT BE BG CH CY CZ DE DK EE ES FI FR GB GR HU IE IT LI LU MC NL PT RO SE SI SK TR**

(30) Priority: **04.06.2002 US 161827**

(43) Date of publication of application:
**23.03.2005 Bulletin 2005/12**

(73) Proprietors:
- **Novozymes A/S**
  **2880 Bagsvaerd (DK)**
- **Novozymes North America, Inc.**
  **Franklinton, NC 27525 (US)**
- **Chr. Hansen A/S**
  **2970 Hørsholm (DK)**

(72) Inventors:
- **SORENSEN, Thomas, Lykke**
  **DK-3450 Aller d (DK)**
- **MADKOR, Sabry, A.**
  **Raleigh, NC 27616 (US)**
- **MIMS-BARNETTE, Sonya**
  **Raleigh, NC 27610 (US)**

(74) Representative: **Kofoed, Gertrud Sonne et al**
**Novozymes A/S**
**Patents**
**Krogshoejvej 36**
**2880 Bagsvaerd (DK)**

(56) References cited:
**WO-A-01/30171     WO-A-02/13620**
**WO-A-02/32232     WO-A-98/31239**

- **DATABASE STN INTERNATIONAL [Online] File FSTA, FSTA accession no. 1991(10):P0008; OKAMOTO, M. ET AL: "High pressure proteolytic digestion of food proteins: selective elimination of Beta-lactoglobulin in bovine milk whey concentrate" XP002254632**
- **DATABASE STN INTERNATIONAL [Online] File CAPLUS, CAPLUS accession no. 1987:495530, Document no. 107:95530; ALKHALAF, W. ET AL: "Use of Rulactine as ripening agent in semi-hard cheese" XP002254633**
- **DATABASE BIOSIS [Online] BIOSCIENCES INFORMATION SERVICE, PHILADELPHIA, PA, US; 1989 STEPANIAK L ET AL: "CHARACTERIZATION OF PROTEINASES FROM PSEUDOMONAS BASED ON HYDROLYSIS OF MILK PROTEINS" Database accession no. PREV199191015312 XP002254634 & ITALIAN JOURNAL OF FOOD SCIENCE, vol. 1, no. 4, 1989, pages 5-12, ISSN: 1120-1770**
- **A.F. MOHEDANO ET AL: "Hydrolysis of milk proteins and formation of peptides by micrococci isolated from raw milk and cheese" MILCHWISSENSCHAFT, vol. 51, no. 2, 1996, pages 70-73, XP002254630**
- **D.G. SCHMIDT ET AL: "Enzymatic hydrolysis of whey proteins. Hydrolysis of alpha-lactalbumin and beta-lactoglobulin in buffer solutions by proteolytic enzymes" NETH. MILK DAIRY J. , vol. 45, 1991, pages 225-240, XP002254631**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 515 612 B1

**Description**

**TECHNICAL FIELD**

The present invention relates to a whey protein hydrolysate produced by treating a whey protein preparation with a metalloprotease and the use of the resulting hydrolysate as a food ingredient.

**BACKGROUND OF THE INVENTION**

In traditional cheesemaking, milk is coagulated by acidification or the combination of acidification and addition of rennet. When a curd with the desired consistency and strength has been obtained, the curd is cut, followed by separation of whey from the curd, e.g. by draining, and the fresh curd is further processed, e.g. by pressing, salting and ripening, to form the finished cheese.

In this process, a considerable loss of milk proteins takes place due to the removal of the whey protein with the whey. The whey proteins can be recovered from the whey and processed into whey protein preparations such as e.g. Whey Protein Concentrates (WPC) and Whey Protein Isolates (WPI). Such whey protein preparations can be used as ingredients food products.

WO02/13260 discloses hydrolysis of whey proteins using any protease that digests whey proteins, such as a metalloprotease, to produce a hydrolyzed whey protein preparation.

Okamoto, M. et al. (1991), Agricultural and Biological Chemistry, 55(5), pp. 1253-1257, discloses digestion of a whey concentrate with thermolysin under high pressure to selectively remove beta-lactoglobulin.

Alkhalaf, W., et al. (1987), Lait, 67(2), pp. 173-185, discloses the use of a metalloprotease as ripening agent in semi-hard cheese.

WO02/32232 discloses incubation of whey protein isolate with thermolysin and an aminopeptidase to obtain a protein hydrolysate rich in leucine and valine followed by inactivation of the enzymes under conditions which do not affect the amino acids and peptides present in the aqueous suspension.

Schmidt and Poll (1991), Neth. Milk Dairy J., 45, pp. 225-240, discloses hydrolysis of whey proteins with different proteases, such as a metalloprotease, and subsequent SDS gel electrophoresis to study the action of the proteases under different conditions.

EP 1048219 discloses cheese containing a whey protein digestion product. The digestion product is produced by the action of a non-rennet protease on whey proteins and subsequently incorporated into the cheese.

However, incorporation of high amounts of whey protein preparations into food products can induce undesirable properties of the food products. High amounts of whey protein can impart an unacceptable taste, e.g. caused by denatured whey proteins, and unacceptable texture.

In cheeses the inclusion of whey proteins can result in reduced ability to melt and/or to flow upon heating (see e.g. Hickey, M. W. & Versteeg, C. (1993) Mozzarella cheese with ultrafiltrate retentate. The Australian J. Dairy Technology). Impaired melting ability is a problem in cheeses made for use as an ingredient in food that is heated, e.g. Pizza Cheese, Mozzarella and the like, where the ability to melt and flow upon heating is desired.

Cheeses based on whey protein, such as Ricotta type cheeses, often display a moist curd that lack the smoothness and cohesiveness of traditional cheeses and has a more grainy and fragile texture. An improved texture would facilitate a wider use of these cheeses as a food ingredient. There is thus a need for a whey protein preparation with improved taste and texture for use as a food ingredient.

**SUMMARY OF THE INVENTION**

According to the invention it has been found that using a metalloprotease for hydrolysis of whey proteins affects the taste and texture of the resulting whey protein hydrolysate.

Thus, the invention relates to a method for producing a whey protein hydrolysate comprising, a) adding a metalloprotease to a composition comprising whey protein, b) heat treating said composition at a temperature of between 70 and 98°C for a time sufficient to induce gelation of the composition.

-The invention further relates to a whey protein hydrolysate produced by the above method.

In another aspect, the invention relates to a method for producing a food product using the above whey protein hydrolysate as an ingredient, and in a yet further aspect, the invention relates to the food product produced by said method.

## DETAILED DESCRIPTION OF THE INVENTION

Whey protein composition

A composition comprising whey protein according to the invention may be any composition comprising whey protein such as milk, cream and cheese whey. Whey derived from any cheese source may be used, including cheddar cheese, Swiss cheese, mozzarella cheese and the like. A composition comprising whey protein may be any aqueous solution comprising whey protein. The whey protein may be obtained by any method known in the art. Preferably, whey protein is obtained by one or more of ultrafiltration, electrodialysis, evaporation, and reverse osmosis of cheese whey. See, e.g., U.S. Patent No. 3,547,900 and Horton et al., Food Technol., 26:30 (1972). Whey protein preparations, which typically contain beta-lactoglobulin and/or alpha-lactalbumin, are commercially available as whey protein concentrates (WPC) or whey protein isolates (WPI), from, e.g., Davisco (Le Sueur MN); Bio-Isolates PLC (Deeside, UK); NZMP North America (Santa Rosa CA); Formost Farms (Baraboo WI); Arla Foods (Union NJ); and Avenmore Waterford (Monroe WI). In a preferred embodiment, the composition comprising whey protein is obtained by dissolving a whey protein concentrate or a whey protein isolate, in water at a concentration corresponding to between 1% and 60% w/w protein, preferably about 5 to 50%, and most preferably about 20 to 40%.

In a preferred embodiment the pH of the composition comprising whey protein is between 4 and 9, such as between 5 and 8, preferably between 6 and 7.

Metalloproteases

Metalloproteases according to the invention are proteases that require zinc or metal ions for catalysis (see e.g. Barret et al., eds, Handbook of Proteolytic enzymes, Academic Press, London 1998, for classification of protelytic enzymes). In a preferred embodiment the metalloprotease is an endopeptidase. In another preferred embodiment the metalloprotease belongs to peptidase family M4, also known as thermolysin-like proteases. In a further preferred embodiment the metalloprotease is derived from *Bacillus amyloliquefaciens.*

An example of a metalloprotease according to the invention is NS46013 derived from *Bacillus amyloliquefaciens* (Novozymes A/S, Bagsværd, Denmark).

The amount of the metalloprotease added to the composition comprising whey protein, the temperature of the composition, and the time the metalloprotease is incubated with the composition before heat treatment, may be determined by methods well known in the art to give the optimal effect, and may vary depending on the enzyme and the nature of the composition comprising whey protein.

The acitivity of the metalloprotease may be expressed in Anson Units (AU). One Anson Unit is defined as the amount of enzyme which under optimal conditions digests haemoglobin at an initial rate, so that there is liberated per minute an amount of TCA soluble product which gives the same colour with phenol reagent as one milliequivalent of tyrosine.

In a preferred embodiment the amount of enzyme added to the composition comprising whey protein is between 0.01 and 10 AU pr g whey protein, such as between 0.1 and 5 AU pr g whey protein, preferably between 0.2 and 2 AU per g whey protein. In another preferred embodiment the amount of enzyme added to the composition comprising whey protein is between 0.001 and 1 AU pr g whey protein, such as between 0.002 and 0.05 AU pr g whey protein, preferably between 0.003 and 0.01 AU per g whey protein.

In a preferred embodiment the metalloprotease is incubated with the composition comprising whey protein at a temperature between 10 and 70°C, such as between 20 and 60°C, preferably between 30 and 60°C, for 10 min to 5 hours, such as 30 min to 3 hours, preferably 30 min to 2 hours.

Heat treatment

After the metalloprotease has been allowed to react with the composition comprising whey protein the composition is subjected to a heat treatment. The heat treatment is conducted at a temperature between 70 and 98°C, such as between 75 and 95°C, for between 1 and 60 min, such as between 10 and 60 min, preferably between 20 and 40 min. In a preferred embodiment the heat treatment is conducted at a temperature and time combination sufficient to inactivate the enzyme. The heat treatment is conducted for a time sufficient to induce gelation of the composition. Gelation can be defined as the loss of solubility of heat denatured whey proteins due to unfolding of protein and or peptide molecules. Gelation can be determined by observing the changes from a liquid solution to a coagulated gelatinous curd.

In one embodiment the hydrolysate is further subjected to a homogenisation step after heat treatment.

A further aspect of the invention relates to the whey protein hydrolysate obtainable by the method of the invention.

Another further aspect of the invention relates to the use of the whey protein hydrolysate of the invention as an ingredient in a food product.

Cheesemaking

In one embodiment of the invention the whey protein hydrolysate is used as an ingredient in production of cheese. In the present context, the term "cheese" refers to any kind of cheese and such as, e.g., natural cheese, cheese analogues and processed cheese. The cheese may be obtained by any suitable process known in the art, such as, e.g., by enzymatic coagulation of the cheese milk with rennet, or by acidic coagulation of the cheese milk with food grade acid or acid produced by lactic acid bacteria growth. In one embodiment, the cheese manufactured by the process of the invention is rennet-curd cheese. Rennet is commercially available, e.g. as Naturen® (animal rennet), Chy-max® (fermentation produced chymosin), Microlant® (Microbial coagulant produced by fermentation), all from Chr. Hansen A/S, Denmark. The cheese milk may be subjected to a conventional cheese-making process.

In one embodiment the cheese is produced for use as a food ingredient.

In a preferred embodiment the cheese is Pizza cheese. Pizza cheese as used herein includes cheeses suitable for pizzas and is usually stretched curd (pasta filata) cheeses. Stretched curd cheeses, e.g. Mozzarella, are normally distinguished by a unique plasticizing and kneading treatment of the fresh curd in hot water, which imparts the finished cheese its characteristic fibrous structure and melting and stretching properties, cf. e.g. "Mozzarella and Pizza cheese" by Paul S. Kindstedt, Cheese: Chemistry, physics and microbiology, Volume 2: Major Cheese groups, second edition, page 337-341, Chapman & Hall.

In another preferred embodiment the cheese is fresh acid curd cheese. Fresh acid curd cheeses are produced by coagulating milk, cream, whey, or any combination of milk, cream and whey, by acidification or the combination of acidification and heat. Coagulation will normally occur at the isoelectric point of casein, i.e. around pH 4.6, or, in the case where heating is used, at a higher pH. The acidification can be accomplished by the conversion of lactose to lactic acid by microbial starter organisms, by addition of acidogens such as glucono-delta-lactone, by addition of acid whey powder, by direct addition of acids such as lactic acid, acetic acid or citric acid, or, by any other method known in the art. One type of acid curd cheese is Ricotta cheese. Ricotta cheese is normally produced from whole or partly skimmed milk, or whey, or a mixture of milk and whey. Manufacture of Ricotta cheese includes heating the milk or whey or milk/whey mixture to a temperature sufficient for coagulation of the protein.

In one embodiment the whey protein hydrolysate is added to the cheese milk prior to, at the same time as, or after, the addition of coagulant. The whey protein hydrolysate may be mixed with the cheese milk by any suitable method known in the art, such as stirring or homogenisation.

A further aspect of the invention relates to the food product obtainable by using the whey protein hydrolysate as an ingredient in the production of a food product.

**EXAMPLES**

Example 1

Preparation of whey protein hydrolysate and use of hydrolysate as ingredient in Pizza cheese

Whey protein (34% crude protein, Land-O-lake) was dissolved in water to yield a 30% solution with pH about 6.5. One batch of the whey protein solution was incubated with 1% (w/w of protein content) of the metalloprotease NS46013 (0.858 AU/g, Novozymes, Bagsværd, Denmark), and one batch was incubated with 2% (w/w of protein content) of the non-metalloprotease SP446 (0.84 AU/ml Novozymes, Bagsværd, Denmark). Both batches were incubated at 50°C for 1 hour and then heat treated at 88°C for 30 min. The hydrolysate was further subjected to a single step homogenisation at 1000 psi and 50°C (utilising the single stage of a two stage Gaulin homogenizer) and stored under refrigeration until use for cheese making.

3 batches of cows milk (Holstein and Jersey breed of The California Polytechnical University dairy Herd) were standardised to 3-4% w/w fat and pasteurised at 76°C for 16 seconds. Whey protein hydrolysate prepared with NS46013 and SP446 respectively, was added to each of two batches of milk to accomplish a level of addition of 28-32% added whey proteins of the total percentage of milk protein. The third batch of milk was used as control. 0.015% w/w of a mixture of StrC-5 and LB-12 DVS cultures (Chr. Hansen, Milwaukee, WI) and 0.09% w/w of Chymax rennet (Chr. Hansen, Milwaukee, WI) was added to each batch. The milk was allowed to coagulate for 45 min at 33°C, before cutting. The cheese curd had a healing time of 5 minutes with no agitation and additional 10 minutes of slow agitation before cooking. The curd/whey mixture was heated at a rate of 0.5°C per minute for the first 30 minutes to a final cooking temperature of 44°C. Temperature was maintained at 44°C until pH reached 6.10-5.9. Approximately 50% of the whey was drained, and the curd was left in the remaining whey with occasional agitation until pH reached 5.2, when the rest of the whey was drained, and 2.5% w/w salt was mixed with the curd. The curd was transferred to mozzarella cooker-stretcher (SSF Inc., Columbus, WI) and cooked and stretched in 71 °C water at a speed set at 60%. The stretched curd was placed into ice water upon leaving the cooker and held submerged for approximately one hour.

Actual cheese yield was calculated as kg of cheese per 100 kg of milk.

Moisture adjusted cheese yield is expressed as the actual yield adjusted to a standard level of moisture. Moisture adjusted yield is calculated by multiplying the actual yield and the ratio of actual moisture content/standard moisture according to the following formula:

$$Y_{adj} = Y_{act} \times 1- (M_{act} \ / \ 1-M_{std})$$

Where $Y_{adj}$= adjusted yield, $Y_{act}$= actual yield, $M_{act}$ = actual fractional moisture content, $M_{std}$ = standard fractional moisture content (0.48)

Cheese meltability was measured by Schreiber test. Cheese samples of equal weight and dimensions were heated in the oven at 100°C for 14 minutes and meltability was expressed as the percent increase in the area of the underlying surface covered by the cheese.

Results

Cheese yield (with and without adjustment for moisture) and meltability is shown in table 1.

Table 1

|  | Control | NS46013 whey protein hydrolysate added | SP446 whey protein hydrolysate added |
| --- | --- | --- | --- |
| Yield (%) | 10.6 | 12.10 | 12.3 |
| Moisture adjusted yield (%) | 11.75 | 12.83 | 12.6 |
| Meltability | 4.42 | 4.19 | 3.42 |

The results in table 1 show that a comparable increase in cheese yield is achieved when adding whey protein hydrolysate produced with either the metalloprotease NS46013 or the non-metalloprotease SP446, compared to yield of the control cheese. It is surprisingly found that the meltability of cheese with NS46013 whey protein hydrolysate is comparable to the meltability of the control cheese, whereas the meltability of the cheese with SP446 whey protein hydrolysate is considerably poorer than the control cheese.

Example 2

Properties of whey protein gel

Whey protein (34% crude protein, Land-O-lake) was dissolved in water to yield a 30% solution with pH about 6.5. One batch of the whey protein solution was incubated with 1% (w/w of protein content) of the metalloprotease NS46013 (0.858 AU/g, Novozymes, Denmark), and one batch was incubated with 2% (w/w of protein content) of the non-metalloprotease SP446 (0.84 AU/ml Novozymes, Denmark). Both batches were incubated at 50°C for 1 hour and then heat treated at 88°C for 30 min.
The hydrolysed whey protein formed gels upon heating. The gels formed by whey protein hydrolysed with NS46013 displayed a softer and more smooth, jelly-like structure than the gel formed by whey protein hydrolysed with SP446. Additionally, the gel made with NS46013 exhibited a lighter white colour and had less flavour of denatured whey protein than the gel made with SP446.

Example 3

Analysis of hydrolysed whey proteins

The pure whey proteins beta-lactoglobulin, alfa-lactalbumin and Bovine Serum Albumin (BSA) as well as WPC (Whey Protein Concentrate, Lacprodan 35, Arla, Denmark) were hydrolysed with NS46013 (metalloprotease from Novozymes A/S, Bagsværd, Denmark) or SP446 (non-metalloprotease from Novozymes A/S, Bagsværd, Denmark) and subsequently heat treated. FPLC analysis was performed before and after heat treatment and on unhydrolysed control samples.

Methods:

A 10% solution of the pure whey protein, or a WPC solution with 10% protein, was incubated at 50°C, and 0.67% (w/w of protein) of NS46013 or SP446 was added. After incubation at 50°C for 60 minutes the solution was heated to 88°C for 30 minutes. Samples for FPLC were taken before addition of enzyme, after incubation at 50°C, and after heat treatment. If a gel or precipitate was formed during the heat treatment, the sample was centrifuged and only the supernatant was analyzed. Control samples were treated as above except that no enzyme was added.

FPLC analysis:

Samples were analyzed on a Superdex75 10/30 column eluted with a buffer of 0.02 M Tris, 4.5 M urea, 0.0064M DTT, at pH 8. UV detection at 220, 280 and 340 nm. The flow rate was 1 ml/minute. Samples were diluted ten times in the eluent and 50$\mu$l was applied to the column.

Results:

Beta-lactoglobulin

Untreated beta-lactoglobulin did not form a gel after heat treatment. Neither did beta-lactoglobulin treated with SP446, but beta-lactoglobulin hydrolyzed by NS46013 formed a clear firm gel after heat treatment.
FPLC: Hydrolysis for 60 minutes with either SP446 or NS46013 resulted in approx. 25% reduction of the beta-lactoglobulin peak area and formation of smaller peptides with longer retention times. Hydrolysis with NS46013 resulted in smaller peptides (longer retention times) than do hydrolysis with SP446. The amount of smaller peptides was reduced after heat treatment, indicating that they were either included in aggregation (SP446) or precipitated in the gel (NS46013) to some extent

Alfa-lactalbumin:

Untreated and SP446 treated solutions of alfa-lactalbumin became thick and pulpy after heat treatment. The NS46013 treated solution also became more viscous after heat treatment, but not to the same extent.
FPLC: After heat treatment of the control sample 40% of the protein was left in solution. SP446 reduced the amount of protein in solution after heat treatment to about 10% and NS46013 to about 20%, meaning that both proteases increased gelling of alfa-lactalbumin.

BSA:

Untreated BSA formed a very firm clear yellow gel after heat treatment. The gel was not broken by centrifugation and it was not possible to separate any supernatant to analyze. BSA hydrolyzed with NS46013 or SP446 formed firm opaque white gels. These gels were less stable and supernatant could be separated by centrifugation. The hydrolysis of BSA using either SP446 or NS46013 was very limited, and only a small fraction of peptides could be seen after 60 minutes incubation. However, hydrolysis with NS46013 gave an appreciably larger amount of peptides in the supernatant after heat treatment than hydrolysis with SP446.

WPC:

Both hydrolysed and control samples formed gels after heat treatment. The amount of protein in the supernatant after heating was lower when NS46013 was used for hydrolysis than when SP446 was used, indicating a higher retention of protein in the gel with NS46013.

Example 4

Production of Cheddar cheese

150 kg pasteurised milk (72°C for 15 seconds) with a fat content of 3.8-3.9% was heated to 32°C. 0.008% of cheese culture (F-DVS RST-630, Chr. Hansen A/S, Hørsholm, Denmark) was added and the milk was left for fermentation. For preparation of experimental cheeses either whey protein hydrolysed with NS46013 as described in example 1 except that the hydrolysate was not homogenised, or unhydrolysed whey proteins prepared in similar whey except for addition of enzyme, was added at a level of 30% of the protein naturally present in the milk. Control cheeses were prepared without addition of whey protein. Calciumchloride was added to the milk during fermentation (7 g per 100 kg milk) and after 45 minutes of fermentation 0.018% rennet was added (Chy-Max Plus 200 IMCU, Chr. Hansen A/S, Hørsholm, Denmark). 45 minutes later the curd was cut in approximately 5 mm cubes. After the curd had stood for a few minutes it was gently stirred in the whey for 15 minutes and scalding was started. The temperature was gradually increased to 40°C over 40 minutes, and the curd was stirred in the whey at this temperature for 45 minutes after which the whey was drained off. After 10 minutes the curd was cut into uniform blocks which were turned every 15-20 minutes for 1.5 hours. The curd blocks were milled and 3 % salt was mixed into the curd over 5-10 minutes. The salted curd was filled into 30x30 cm moulds and pressed for 15 minutes at 2 bar, followed by 18 hours pressing at 7 bar. 24 hours old cheeses were analysed for fat (Smidt-Bondzynski-Ratzlaff method), protein (Kjeldahl method) and moisture. 2 cheese trials were conducted.

Results:

Table 2. Results from cheese trial 1.

|  | Control cheese | Cheese with unhydrolysed whey addition | Cheese with hydrolysed whey addition |
| --- | --- | --- | --- |
| Cheese weight before press, kg | 17.75 | 19.045 | 19.030 |
| Cheese weight after press, kg | 15.575 | 16.695 | 16.880 |
| Fat in cheese, kg | 5.21 | 5.19 | 5.24 |
| Fat loss, kg | 0.28 | 0.67 | 0.62 |
| Fat yield, % | 89.92 | 88.59 | 89.36 |
| Protein in cheese, kg | 3.91 | 4.08 | 4.12 |
| Protein loss, kg | 1.15 | 1.31 | 1.26 |
| Protein yield, % | 77.22 | 75.77 | 76.60 |

Table 3. Results from cheese trial 2.

|  | Control cheese | Cheese with unhydrolysed whey addition | Cheese with hydrolysed whey addition |
| --- | --- | --- | --- |
| Cheese weight before press, kg | 18.075 | 19.235 | 19.595 |
| Cheese weight after press, kg | 15.910 | 16.875 | 17.505 |
| Fat in cheese, kg | 5.19 | 5.16 | 5.34 |
| Fat loss, kg | 0.64 | 0.71 | 0.53 |
| Fat yield, % | 95.15 | 94.26 | 94.48 |
| Protein in cheese, kg | 3.86 | 4.04 | 4.22 |
| Protein loss, kg | 0.96 | 1.39 | 1.22 |
| Protein yield, % | 75.69 | 74.44 | 77.61 |

For both trials the melting and stretching properties of cheeses were evaluated after 14 and 30 days. Cheeses produced with hydrolysed whey proteins showed superior melting and stretching properties compared to cheeses produced with unhydrolysed whey proteins.

**Claims**

1.  A method for producing a whey protein hydrolysate comprising

    a) Adding a metalloprotease to a composition comprising whey protein
    b) Heat treating said composition at a temperature of between 70 and 98°C for a time sufficient to induce gelation of the composition.

2.  The method of claim 1 where said metalloprotease is derived from *Bacillus amyloliquefaciens*.

3.  The method of claim 1 or claim 2 where said metalloprotease belongs to peptidase family M4.

4.  The method of any of the claims 1-3 where the amount of protease added in step a) is between 0.001 and 1 AU per g whey protein.

5.  The method of any of the claims 1-3 where the amount of protease added in step a) is between 0.002 and 0.05 AU per g whey protein.

6.  The method of any of the claims 1-3 where the amount of protease added in step a) is between 0.003 and 0.01 AU per g whey protein.

7.  The method of any of the claims 1-6 where said heat treatment is conducted at a temperature sufficient to inactivate the enzyme.

8.  The method of any of the claims 1-7 where said heat treatment is conducted at a temperature of between 80 and 98°C.

9.  The method of any of the claims 1-7 where said heat treatment is conducted at a temperature of between 85 and 95°C.

10. The method of any of the claims 1-9 where the pH of said whey protein composition is between 4 and 9.

11. The method of any of the claims 1-9 where the pH of said whey protein composition is between 5 and 8.

12. The method of any of the claims 1-9 where the pH of said whey protein composition is between 6 and 7.

13. A whey protein hydrolysate produced by the method of any of the claims 1-12.

14. The method of any of the claims 1-12 further comprising using the whey protein hydrolysate as ingredient in the production of a food product.

15. The method of claim 14 wherein said food product is cheese.

16. The method of claim 15 wherein said cheese belongs to the group of stretched curd cheeses.

17. The method of claim 15 or claim 16 where said cheese is Pizza Cheese.

18. The method of claim 15 wherein said cheese is Ricotta type cheese.

19. The method of any of the claims 15-18 where said cheese is produced for use as a food ingredient.

20. The method of any of the claims 15-19 where the whey protein hydrolysate is added to the cheese milk prior to the addition of coagulant.

21. The method of claim 20 further comprising homogenising the cheese milk after addition of the whey protein hydrolysate.

22. The food product produced by the method of claim 14.

23. The cheese produced by the method of any of the claims 15-21.

**24.** A method for producing cheese comprising

a) Adding a metalloprotease to a composition comprising whey protein;
b) Heat treating said composition at a temperature of between 70 and 98°C for a time sufficient to induce gelation of the composition; and
c) Adding said composition to cheese milk and producing cheese from the cheese milk.


**Patentansprüche**

**1.** Verfahren zum Herstellen eines Molkeproteinhydrolysats, umfassend:

a) Hinzufügen einer Metalloprotease zu einer Zusammensetzung, umfassend Molkeprotein,
b) Hitzebehandeln der Zusammensetzung bei einer Temperatur von zwischen 70 und 98°C für eine Zeit, die ausreichend ist, Gelatinierung der Zusammensetzung zu induzieren.

**2.** Verfahren nach Anspruch 1, wobei die Metalloprotease aus *Bacillus amyloliquefaciens* abgeleitetet ist.

**3.** Verfahren nach Anspruch 1 oder Anspruch 2, wobei die Metalloprotease der Peptidasefamilie M4 angehört.

**4.** Verfahren nach einem beliebigen der Ansprüche 1-3, wobei die Menge an in Schritt a) hinzugefügter Protease zwischen 0,001 und 1 AU pro g Molkeprotein beträgt.

**5.** Verfahren nach einem beliebigen der Ansprüche 1-3, wobei die Menge an in Schritt a) hinzugefügter Protease zwischen 0,002 und 0,05 AU pro g Molkeprotein beträgt.

**6.** Verfahren nach einem beliebigen der Ansprüche 1-3, wobei die Menge an in Schritt a) hinzugefügter Protease zwischen 0,003 und 0,01 AU pro g Molkeprotein beträgt.

**7.** Verfahren nach einem beliebigen der Ansprüche 1-6, wobei die Hitzebehandlung bei einer Temperatur durchgeführt wird, die ausreichend ist, um das Enzym zu inaktivieren.

**8.** Verfahren nach einem beliebigen der Ansprüche 1-7, wobei die Hitzebehandlung bei einer Temperatur zwischen 80 und 98°C durchgeführt wird.

**9.** Verfahren nach einem beliebigen der Ansprüche 1-7, wobei die Hitzebehandlung bei einer Temperatur zwischen 85 und 95°C durchgeführt wird.

**10.** Verfahren nach einem beliebigen der Ansprüche 1-9, wobei der pH der Molkeproteinzusammensetzung zwischen 4 und 9 beträgt.

**11.** Verfahren nach einem beliebigen der Ansprüche 1-9, wobei der pH der Molkeproteinzusammensetzung zwischen 5 und 8 beträgt.

**12.** Verfahren nach einem beliebigen der Ansprüche 1-9, wobei der pH der Molkeproteinzusammensetzung zwischen 6 und 7 beträgt.

**13.** Molkeproteinhydrolysat, hergestellt durch das Verfahren gemäß einem beliebigen der Ansprüche 1-12.

**14.** Verfahren nach einem beliebigen der Ansprüche 1-12, des Weiteren umfassend das Verwenden des Molkeproteinhydrolysats als Bestandteil in der Herstellung eines Nahrungsmittelproduktes.

**15.** Verfahren nach Anspruch 14, wobei das Nahrungsmittelprodukt Käse ist.

**16.** Verfahren nach Anspruch 15, wobei der Käse der Gruppe von Knetkäse ("stretched curd cheeses") angehört.

**17.** Verfahren nach Anspruch 15 oder Anspruch 16, wobei der Käse Pizza-Käse ist.

**18.** Verfahren nach Anspruch 15, wobei der Käse Ricotta-artiger Käse ist.

**19.** Verfahren nach einem beliebigen der Ansprüche 15-18, wobei der Käse zur Verwendung als ein Nahrungsmittelbestandteil hergestellt wird.

**20.** Verfahren nach einem beliebigen der Ansprüche 15-19, wobei das Molkeproteinhydrolysat zu der Käsemilch vor der Zugabe von Gerinnungsmittel hinzugefügt wird.

**21.** Verfahren nach Anspruch 20, des Weiteren umfassend das Homogenisieren der Käsemilch nach Zugabe des Molkeproteinhydrolysats.

**22.** Nahrungsmittelprodukt, hergestellt durch das Verfahren gemäß Anspruch 14.

**23.** Käse, hergestellt durch das Verfahren gemäß einem beliebigen der Ansprüche 15-21.

**24.** Verfahren zum Herstellen von Käse, umfassend

a) Hinzufügen einer Metalloprotease zu einer Zusammensetzung, umfassend Molkeprotein;
b) Hitzebehandeln der Zusammensetzung bei einer Temperatur zwischen 70 und 98°C für eine Zeit, die ausreichend ist, Gelatinierung der Zusammensetzung zu induzieren; und
c) Hinzufügen der Zusammensetzung zu Käsemilch und Herstellen von Käse aus der Käsemilch.

**Revendications**

**1.** Procédé pour produire un hydrolysat de protéines de lactosérum comprenant

(a) l'addition d'une métalloprotéase à une composition comprenant des protéines de lactosérum
(b) le traitement thermique de ladite composition à une température comprise entre 70 et 98°C pendant un temps suffisant pour induire la gélification de la composition.

**2.** Procédé selon la revendication 1 où ladite métalloprotéase est obtenue à partir de *Bacillus amyloliquefaciens.*

**3.** Procédé selon la revendication 1 ou la revendication 2 où ladite métalloprotéase appartient à la famille M4 des peptidases.

**4.** Procédé selon l'une quelconque des revendications 1-3 où la quantité de protéase ajoutée à l'étape a) est comprise entre 0,001 et 1 Unité Anson par gramme de protéine de lactosérum.

**5.** Procédé selon l'une quelconque des revendications 1 à 3 où la quantité de protéase ajoutée à l'étape a) est comprise entre 0,002 et 0,05 Unité Anson par gramme de protéines de lactosérum.

**6.** Procédé selon l'une quelconque des revendications 1-3 où la quantité de protéase ajoutée à l'étape a) est comprise entre 0,003 et 0,01 Unité Anson par gramme de protéines de lactosérum.

**7.** Procédé selon l'une quelconque des revendications 1-6 où ledit traitement thermique est réalisé à une température suffisante pour inactiver l'enzyme.

**8.** Procédé selon l'une quelconque des revendications 1-7 où ledit traitement thermique est réalisé à une température comprise entre 80 et 98°C.

**9.** Procédé selon l'une quelconque des revendications 1-7 où ledit traitement thermique est réalisé à une température comprise entre 85 et 95°C.

**10.** Procédé selon l'une quelconque des revendications 1-9 où le pH de ladite composition de protéines de lactosérum est compris entre 4 et 9.

**11.** Procédé selon l'une quelconque des revendications 1-9 où le pH de ladite composition de protéines de lactosérum est compris entre 5 et 8.

12. Procédé selon l'une quelconque des revendications 1 à 9 où le pH de ladite composition de protéines de lactosérum est compris entre 6 et 7.

13. Hydrolysat de protéines de lactosérum produit selon le procédé de l'une quelconque des revendications 1-12.

14. Procédé selon l'une quelconque des revendications 1-12 comprenant en outre l'utilisation de l'hydrolysat de protéines de lactosérum comme ingrédient dans la fabrication d'un produit alimentaire.

15. Procédé selon la revendication 14 dans lequel ledit produit alimentaire est un fromage.

16. Procédé selon la revendication 15 dans lequel ledit fromage appartient au groupe des fromages en grains étirés.

17. Procédé selon la revendication 15 ou la revendication 16 où ledit fromage est un fromage à pizza.

18. Procédé selon la revendication 15 dans lequel ledit fromage est un fromage de type Ricotta.

19. Procédé selon l'une des revendications 15-18 où ledit fromage est produit pour être utilisé comme ingrédient alimentaire.

20. Procédé selon l'une des revendications 15-19 où l'hydrolysat de protéines de lactosérum est ajouté au lait de fromagerie avant l'ajout de coagulant.

21. Procédé selon la revendication 20 comprenant en outre l'homogénéisation du lait de fromagerie après l'ajout de l'hydrolysat de protéines de lactosérum.

22. Produit alimentaire produit selon le procédé de la revendication 14.

23. Fromage produit selon le procédé de l'une quelconque des revendications 15-21.

24. Procédé pour produire du fromage comprenant

(a) l'addition d'une métalloprotéase à une composition comprenant des protéines de lactosérum ;
(b) le traitement thermique de ladite composition à une température comprise entre 70 et 98°C pendant un temps suffisant pour induire la gélification de la composition ; et
(c) l'addition de ladite composition à du lait de fromagerie et la production de fromage à partir du lait de fromagerie.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0213260 A
- WO 0232232 A
- EP 1048219 A
- US 3547900 A

**Non-patent literature cited in the description**

- **Okamoto, M. et al.** *Agricultural and Biological Chemistry,* 1991, vol. 55 (5), 1253-1257
- **Alkhalaf, W. et al.** *Lait,* 1987, vol. 67 (2), 173-185
- **Schmidt ; Poll.** *Neth. Milk Dairy J.,* 1991, vol. 45, 225-240
- **Hickey, M. W. ; Versteeg, C.** Mozzarella cheese with ultrafiltrate retentate. *The Australian J. Dairy Technology,* 1993
- **Horton et al.** *Food Technol.,* 1972, vol. 26, 30
- Handbook of Proteolytic enzymes. Academic Press, 1998
- Mozzarella and Pizza cheese. **Paul S. Kindstedt.** Cheese: Chemistry, physics and microbiology. Chapman & Hall, vol. 2, 337-341